# EUROPEAN PATENT SPECIFICATION

(11) **EP 4 469 829 B1**
(45) Date of publication and mention of the grant of the patent: **30.09.2026**
(21) Application number: 22922593.3
(22) Date of filing: 25.01.2022
(51) Int. Cl.: G01S 19/48, H04L 43/0864, G01S 5/16, G01S 5/02, G06V 20/40, H04W 4/02

(54) **METHOD AND SYSTEM FOR LOOP CLOSURE DETECTION**
VERFAHREN UND SYSTEM ZUR SCHLEIFENSCHLUSSERKENNUNG
PROCÉDÉ ET SYSTÈME DE DÉTECTION DE FERMETURE DE BOUCLE

(43) Date of publication of application: 04.12.2024
(73) Proprietor: QUALCOMM INCORPORATED, San Diego, California 92121-1714 (US)
(72) Inventor: LI, Yuan, San Diego, California 92121-1714 (US); CHEN, Zhi, San Diego, California 92121-1714 (US)
(74) Representative: Reddie & Grose LLP
(86) International application number: PCT/CN2022/073626
(87) International publication number: WO 2023/141740

(56) References cited:
- EP-A1- 3 105 016
- EP-A1- 3 186 654
- WO-A2-2010/059934
- US-A1- 2019 094 027
- US-A1- 2020 074 670
- GUCLU OGUZHAN ET AL: "Fast and Effective Loop Closure Detection to Improve SLAM Performance", JOURNAL OF INTELLIGENT, SPRINGER NETHERLANDS, DORDRECHT, vol. 93, no. 3, 10 October 2017 (2017-10-10), pages 495 - 517, XP036707902, ISSN: 0921-0296, [retrieved on 20171010], DOI: 10.1007/S10846-017-0718-Z

## Description

### BACKGROUND

Robotic devices are being developed for a wide range of applications. Robotic devices may be equipped with cameras capable of capturing an image, a sequence of images, or video, and using such data in performing a robotic operation, such as navigation, guiding an actuator, etc. Some robotic devices may be equipped with an image sensor, such as a monocular, binocular, or multiocular camera.

Robotic devices may use image data from a camera to perform any number of tasks. For example, to localize or re-localize itself, a robotic device may capture and process images of its environment. However, image processing is computing resource intensive, and image processing for a localization process, such as loop closure detection, may be difficult or impossible for robotic devices with limited processing resources.
US 2019/0094027 discloses a method for determining the location of a mobile device using a SLAM candidate component to identify a first candidate key frame matching a current captured frame by a first degree from an interval-based key frame set with key frames selected on a recurring interval from multiple earlier captured frames captured by a mobile device camera of surroundings within a define area.

### SUMMARY

The scope of the present invention is defined by the scope of the appended claims. Any embodiments that do not fall under the scope of the claims are examples which are useful for understanding the invention, but do not form a part of the invention.

### BRIEF DESCRIPTION OF THE DRAWINGS

The accompanying drawings, which are incorporated herein and constitute part of this specification, illustrate example embodiments, and together with the general description given above and the detailed description given below, serve to explain the features of various embodiments.
FIG. 1 is a system block diagram of a robotic device operating within communication system according to various embodiments.
FIG. 2 is a component block diagram illustrating components of a robotic device according to various embodiments.
FIG. 3 is a component block diagram illustrating a processing device suitable for use in robotic devices implementing various embodiments.
FIG. 4 is a component block diagram illustrating a processing system of a robotic device in accordance with various embodiments.
FIG. 5 is a conceptual diagram illustrating aspects of a method for loop closure detection performed by a processing device of a robotic device according to various embodiments.
FIG. 6A is a processor flow diagram illustrating an example method performed by a processing device of a robotic device for loop closure detection according to various embodiments
FIG. 6B is a process flow diagram illustrating operations that may be performed by a processing device of a robotic device as part of the method for loop closure detection according to various embodiments.

### DETAILED DESCRIPTION

Various embodiments will be described in detail with reference to the accompanying drawings. Wherever possible, the same reference numbers will be used throughout the drawings to refer to the same or like parts. References made to particular examples and embodiments are for illustrative purposes, and are not intended to limit the scope of the claims.

Various embodiments include methods that may be implemented on a processor of a robotic device for loop closure detection. Various embodiments improve the operation of robotic devices by increasing the efficiency and decreasing the computational burden imposed by performing localization operations such as loop closure detection.

As used herein, the term "robotic device" refers to one of various types of vehicles, automated and self-propelled machines, and other forms of robots including a camera system and an onboard processing device configured to provide some autonomous or semi-autonomous capabilities. Examples of robotic devices include but are not limited to: factory robotic devices, autonomous robots, aerial vehicles, such as an unmanned aerial vehicle (UAV); ground vehicles (e.g., an autonomous or semi-autonomous car, a vacuum robot, etc.); water-based vehicles (i.e., vehicles configured for operation on the surface of the water or under water); space-based vehicles (e.g., a spacecraft or space probe); and/or some combination thereof. In some embodiments, the robotic device may be manned. In other embodiments, the robotic device may be unmanned. In embodiments in which the robotic device is autonomous, the robotic device may include an onboard computing device configured to maneuver and/or navigate the robotic device without remote operating instructions (i.e., autonomously), such as from a human operator (e.g., via a remote computing device). In embodiments in which the robotic device is semi-autonomous, the robotic device may include an onboard computing device configured to receive some information or instructions, such as from a human operator (e.g., via a remote computing device), and autonomously maneuver and/or navigate the robotic device consistent with the received information or instructions. A robotic device may include a variety of components and/or payloads that may perform a variety of functions.

In order to navigate, path plan, and perform tasks, a robotic device typically needs to localize itself in its environment. A simple form of localization is to use a wheel odometry technique such as measuring an amount of rotation of robotic device's wheels, e.g., using wheel encoders or other suitable devices. However, a number of error sources, including wheel slippage in uneven terrain or slippery floors, make such techniques relatively unreliable. One improved localization strategy is Simultaneous Localization and Mapping (SLAM). SLAM is a process in which a robotic device localizes itself in an unknown environment and builds a map of the environment using one or more external sensors, such as a camera. In some implementations, the robotic device using SLAM may attempt to obtain a globally consistent estimate of the robotic device's trajectory and map. Such consistency may be achieved by maneuvering the robotic device (e.g., along an approximately loop-shaped path) and determining when the robotic device arrives at a previously-mapped location, referred to as "loop closure detection."

However, visual or image-based loop closure detection ("visual loop closure detection") involves computing resource intensive operations that may strain a robotic device with limited computing resources or computing power. In performing visual loop closure detection, a robotic device typically captures numerous images of its environment while maneuvering in the environment. The robotic device performs various image processing operations on each image, and compares each new image to every (or nearly every) previously-captured image. As the robotic device captures more images, a memory queue (or other memory storage) of the captured images grows. In some implementations, processed image data or data associated with processed image data, such as a "bag of words" vocabulary of image features, increases as well. The longer a robotic device performs such visual loop closure operations, the more the amount of information that the robotic device must store and process increases, imposing an ever-increasing computational burden on the robotic device.

Various embodiments enable a robotic device to perform loop closure detection more efficiently and to reduce computing device load and power consumption. In various embodiments a robotic device may maneuver through a plurality of locations. In some embodiments, the robotic device may maneuver along a substantially loop-shaped path. The robotic device may determine its location (i.e., of the robotic device) at each of the plurality of locations using a round trip time (RTT) measurement of a signal sent to an access point. In some embodiments, the RTT measurement includes a travel time of a signal from the robotic device to the access point plus a travel time of a signal (e.g., an acknowledgement or response) from the access point to the robotic device. In some embodiments, the robotic device may perform the RTT measurement of a signal from the access point that is configured according to the Institute of Electrical and Electronics Engineers (IEEE) 802.11mc standard or another suitable technical standard.

In some embodiments, the robotic device may be configured to receive a signal from up to three access points, and to determine a location of the robotic device using an RTT measurement of each signals of each of the access points. In some embodiments, the robotic device may be configured to receive a signal from a signal access point, and to determine a location of the robotic device using an RTT measurement of a signal of the single access point. In some embodiments, the robotic device may be configured to determine an angle associated with the signal of the single access point (e.g., an angle of arrival), and the robotic device may determine a location of the robotic device using the determined angle associated with the signal and the RTT measurement of the signal..

In some embodiments, as the robotic device maneuvers through the plurality of locations, the robotic device may determine whether its location is within a threshold distance of a previously-visited location. In some embodiments, the robotic device may determine whether its location is less than, or is less than or equal to, the threshold distance from the previously-visited location. In some embodiments, in response to determining that the location of the robotic device is within the threshold distance of the previously-visited location, the robotic device may perform visual loop closure detection. In this manner, the robotic device may identify a possible or candidate location for loop closure without using a more computationally intensive process such as visual loop closure detection. When the robotic device determines a candidate location for loop closure, the robotic device may then employ more computationally intensive visual loop closure detection procedures. In this manner, the robotic device may reduce computing resources and power consumed by the more computationally demanding processes.

In some embodiments, the robotic device may compare a determined location of the robotic device with every previously-determined location of the robotic device while maneuvering the robotic device through the plurality of locations. Comparing various location information is typically less computing resource intensive than performing visual loop closure detection. In some embodiments, the robotic device may perform a Wi-Fi RTT measurement to determine the location of the robotic device.

In some embodiments, the robotic device may select a plurality of keyframes from among images captured using a camera of the robotic device, and may determine the location of the robotic device coincident with each of the plurality of keyframes. In some embodiments, the robotic device may capture one or more images of its environment using an image sensor such as a camera while maneuvering the robotic device through the plurality of locations. In such captured images, keyframes are typically interspersed among more numerous non-keyframes (e.g., image frames, segments, or portions that do not serve as keyframes). In some embodiments, the selection or incidence of each keyframe may serve as a convenient time or trigger for the robotic device to determine its location by signal RTT measurement. In some embodiments, the robotic device may associate with each respective keyframe the determined location of the robotic device coincident with each respective keyframe. In some embodiments, the robotic device may determine whether a location of the robotic device that is associated with a keyframe is within a threshold distance of a previously-visited one of the plurality of locations associated with another keyframe.

Various embodiments improve the operation of robotic devices by increasing the efficiency and decreasing the computational burden imposed by performing loop closure detection. Various embodiments enable a robotic device to identify a possible or candidate location for loop closure without using a more computationally intensive process such as visual loop closure detection. In this manner, the robotic device may reduce computing resources and power consumed by such computationally demanding processes.

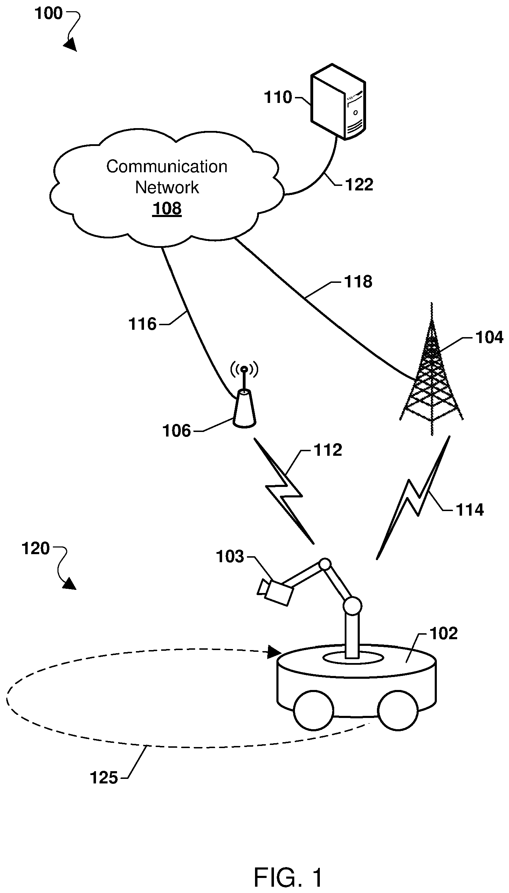

Various embodiments may be implemented within a robotic device operating within a variety of communication systems 100, an example of which is illustrated in FIG. 1. With reference to FIG. 1, the communication system 100 may include a robotic device 102, a network device 104, such as a network node or base station, an access point 106, a communication network 108, and a network element 110. In some embodiments, the robotic device 102 may be equipped with a camera 103.

The network device 104 and the access point 106 may provide wireless communications to access the communication network 108 over a wired and/or wireless communication backhaul 116 and 118, respectively. In various communication network implementations or architectures, a network node may be implemented as an aggregated base station, as a disaggregated base station, an integrated access and backhaul (IAB) node, a relay node, a sidelink node, etc. Also, in various communication network implementations or architectures, a network device (or network entity) may be implemented in an aggregated or monolithic base station architecture, or alternatively, in a disaggregated base station architecture, and may include one or more of a central unit (CU), a distributed unit (DU), a radio unit (RU), a Near-Real Time (Near-RT) RAN Intelligent Controller (RIC), or a Non-Real Time (Non-RT) RIC. The network device 104 may include base stations configured to provide wireless communications over a wide area (e.g., macro cells), as well as small cells, which may include a micro cell, a femto cell, a pico cell, and other similar network access points. Other examples of network devices are also possible.

The access point 106 may include access points configured to provide wireless communications over a relatively smaller area. For example, access points may be WiFi transceivers or hotspots coupled to the Internet. Other examples of access points are also possible.

The robotic device 102 may communicate with the network device 104 over a wireless communication link 112, and with the access point 106 over a wireless communication link 114. The wireless communication links 112 and 114 may include a plurality of carrier signals, frequencies, or frequency bands, each of which may include a plurality of logical channels. The wireless communication links 112 and 114 may utilize one or more radio access technologies (RATs). Examples of RATs that may be used in a wireless communication link in various embodiments include medium range protocols such as Wi-Fi, LTE-U, LTE-Direct, LAA, MuLTEfire, and relatively short range RATs such as ZigBee, Bluetooth, and Bluetooth Low Energy (LE). However, such examples should not be considered limiting. For example, embodiments are also possible in which a wireless communication link uses other RATs, such as 3GPP Long Term Evolution (LTE), 3G, 4G, 5G, Global System for Mobility (GSM), Code Division Multiple Access (CDMA), Wideband Code Division Multiple Access (WCDMA), Worldwide Interoperability for Microwave Access (WiMAX), Time Division Multiple Access (TDMA), and other mobile telephony communication technologies cellular RATs
The network element 110 may include a network server or another similar network element. The network element 110 may communicate with the communication network 108 over a communication link 122. The robotic device 102 and the network element 110 may communicate via the communication network 108. The network element 110 may provide the robotic device 102 with a variety of information, such as navigation information, weather information, information about local air, ground, and/or sea traffic, movement control instructions, and other information, instructions, or commands relevant to operations of the robotic device 102.

In various embodiments, the robotic device 102 may move in an environment 120. In some embodiments, the robotic device 102 may be configured to perform operations to localize the robotic device 102 in the environment 120 to enable the robotic device 103 to maneuver in and interact with the environment 120. In some embodiments, the robotic device may maneuver in along approximately loop-shaped path 125. In some embodiments, the robotic device may use signals received from or exchange with the access point 106 or the network device 104 to perform operations for loop closure detection, as further described below.

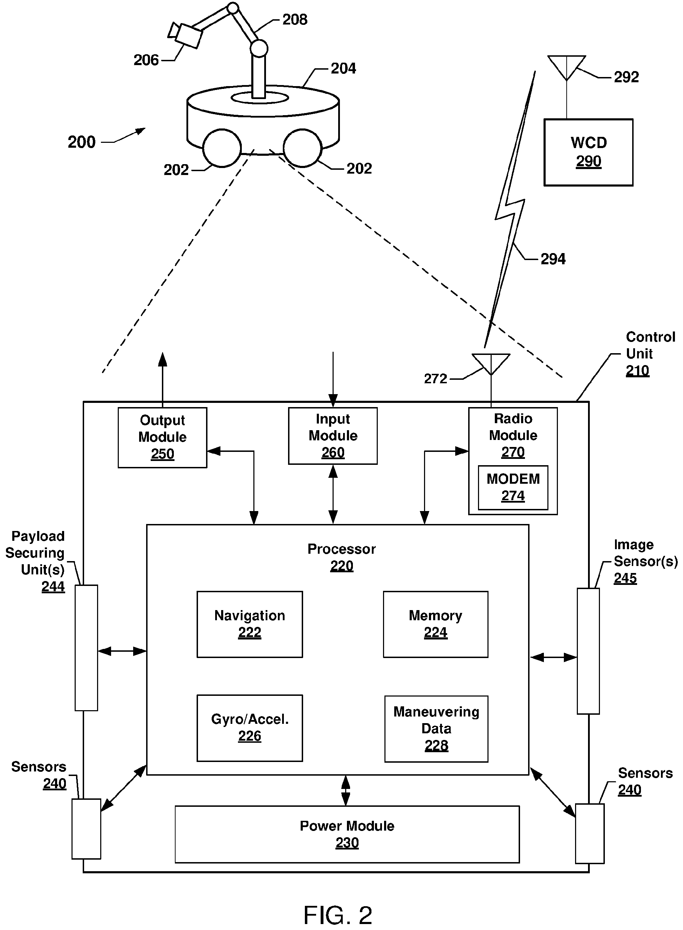

FIG. 2 is a component block diagram illustrating components of an example robotic device 200 according to various embodiments. Robotic devices may include winged or rotorcraft varieties. Example robotic device 200 is illustrated as a ground vehicle design that utilizes one or more wheels 202 driven by corresponding motors to provide locomotion to the robotic device 200. The illustration of robotic device 200 is not intended to imply or require that various embodiments are limited to ground robotic devices. For example, various embodiments may be used with rotorcraft or winged robotic devices, water-borne robotic devices, and space-based robotic devices.

With reference to FIGS. 1 and 2, the robotic device 200 may be similar to the robotic device 102. The robotic device 200 may include a number of wheels 202, a body 204, and a camera 206 (e.g., camera 103). The frame 204 may provide structural support for the motors and their associated wheels 202 as well as for the camera 206. The frame 204 may also support an arm 208 or another suitable extension, which may in turn support the camera 206. In some embodiments, the arm 208, or segments of the arm 208, may be configured to articulate or move by one or more joints, bending elements, or rotating elements. Similarly, the camera 206 may be moveably attached to the arm 208 by a joint element that enables the camera 206 to move relative to the arm 208. For ease of description and illustration, some detailed aspects of the robotic device 200 are omitted such as wiring, motors, frame structure interconnects, or other features that would be known to one of skill in the art. While the illustrated robotic device 200 has wheels 202, this is merely exemplary and various embodiments may include any variety of components to provide propulsion and maneuvering capabilities, such as treads, paddles, skids, or any combination thereof or of other components.

The robotic device 200 may further include a control unit 210 that may house various circuits and devices used to power and control the operation of the robotic device 200. The control unit 210 may include a processor 220, a power module 230, sensors 240, one or more payload securing units 244, one or more image sensors 245 (e.g., cameras), an output module 250, an input module 260, and a radio module 270.

The processor 220 may be configured with processor-executable instructions to control travel and other operations of the robotic device 200, including operations of various embodiments. The processor 220 may include or be coupled to a navigation unit 222, a memory 224, a gyro/accelerometer unit 226, and a maneuvering data module 228. The processor 220 and/or the navigation unit 222 may be configured to communicate with a server through a wireless connection (e.g., a wireless wide area network, a cellular data network, etc.) to receive data useful in navigation, provide real-time position reports, and assess data.

The maneuvering data module 228 may be coupled to the processor 220 and/or the navigation unit 222, and may be configured to provide travel control-related information such as orientation, attitude, speed, heading, and similar information that the navigation unit 222 may use for navigation purposes, such as dead reckoning between Global Navigation Satellite System (GNSS) position updates. The gyro/accelerometer unit 226 may include an accelerometer, a gyroscope, an inertial sensor, an inertial measurement unit (IMU), or other similar sensors. The maneuvering data module 228 may include or receive data from the gyro/accelerometer unit 226 that provides data regarding the orientation and accelerations of the robotic device 200 that may be used in navigation and positioning calculations, as well as providing data used in various embodiments for processing images.

The processor 220 may further receive additional information from one or more image sensors 245 and/or other sensors 240. In some embodiments, the camera(s) 245 may include an optical sensor capable of infrared, ultraviolet, and/or other wavelengths of light. The sensors 240 may also include a wheel sensor, a radio frequency (RF) sensor, a barometer, a sonar emitter/detector, a radar emitter/detector, a microphone or another acoustic sensor, or another sensor that may provide information usable by the processor 220 for movement operations as well as navigation and positioning calculations. The sensors 240 may include contact or pressure sensors that may provide a signal that indicates when the robotic device 200 has made contact with a surface. The payload-securing units 244 may include an actuator motor that drives a gripping and release mechanism and related controls that are responsive to the control unit 210 to grip and release a payload in response to commands from the control unit 210.

The power module 230 may include one or more batteries that may provide power to various components, including the processor 220, the sensors 240, the payload-securing unit(s) 244, the camera(s) 245, the output module 250, the input module 260, and the radio module 270. In addition, the power module 230 may include energy storage components, such as rechargeable batteries. The processor 220 may be configured with processor-executable instructions to control the charging of the power module 230 (i.e., the storage of harvested energy), such as by executing a charging control algorithm using a charge control circuit. Alternatively or additionally, the power module 230 may be configured to manage its own charging. The processor 220 may be coupled to the output module 250, which may output control signals for managing the motors that drive the rotors 202 and other components.

The robotic device 200 may be controlled through control of the individual motors of the rotors 202 as the robotic device 200 progresses toward a destination. The processor 220 may receive data from the navigation unit 222 and use such data in order to determine the present position and orientation of the robotic device 200, as well as the appropriate course towards the destination or intermediate sites. In various embodiments, the navigation unit 222 may include a GNSS receiver system (e.g., one or more global positioning system (GPS) receivers) enabling the robotic device 200 to navigate using GNSS signals. Alternatively or in addition, the navigation unit 222 may be equipped with radio navigation receivers for receiving navigation beacons or other signals from radio nodes, such as navigation beacons (e.g., very high frequency (VHF) omni-directional range (VOR) beacons), Wi-Fi access points, cellular network sites, radio station, remote computing devices, other robotic devices, etc.

The radio module 270 may be configured to receive navigation signals, such as signals from aviation navigation facilities, etc., and provide such signals to the processor 220 and/or the navigation unit 222 to assist in robotic device navigation. In various embodiments, the navigation unit 222 may use signals received from recognizable RF emitters (e.g., AM/FM radio stations, Wi-Fi access points, and cellular network devices) on the ground.

The radio module 270 may include a modem 274 and a transmit/receive antenna 272. The radio module 270 may be configured to conduct wireless communications with a variety of wireless communication devices (e.g., a wireless communication device (WCD) 290), examples of which include a wireless telephony network device, RU, or cell tower (e.g., the network device 104), a network access point (e.g., the access point 106), a beacon, a smartphone, a tablet, or another computing device with which the robotic device 200 may communicate (such as the network element 110). The processor 220 may establish a bi-directional wireless communication link 294 via the modem 274 and the antenna 272 of the radio module 270 and the wireless communication device 290 via a transmit/receive antenna 292. In some embodiments, the radio module 270 may be configured to support multiple connections with different wireless communication devices using different radio access technologies.

In various embodiments, the wireless communication device 290 may be connected to a server through intermediate access points. In an example, the wireless communication device 290 may be a server of a robotic device operator, a third party service (e.g., package delivery, billing, etc.), or a site communication access point. The robotic device 200 may communicate with a server through one or more intermediate communication links, such as a wireless telephony network that is coupled to a wide area network (e.g., the Internet) or other communication devices. In some embodiments, the robotic device 200 may include and employ other forms of radio communication, such as mesh connections with other robotic devices or connections to other information sources (e.g., balloons or other stations for collecting and/or distributing weather or other data harvesting information).

In various embodiments, the control unit 210 may be equipped with an input module 260, which may be used for a variety of applications. For example, the input module 260 may receive images or data from an onboard camera or sensor, or may receive electronic signals from other components (e.g., a payload).

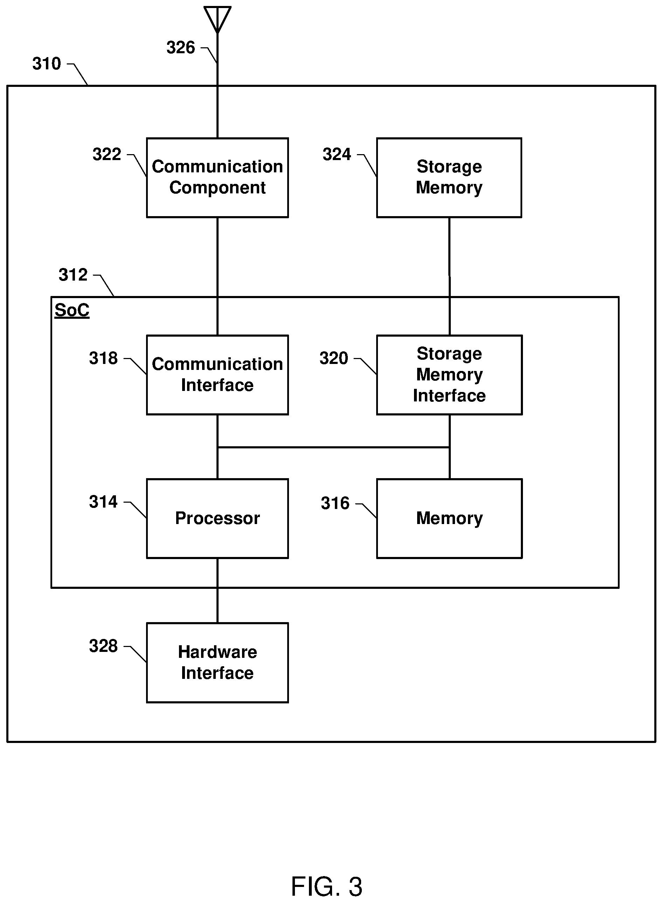

FIG. 3 is a component block diagram illustrating a processing device 310 suitable for use in robotic devices implementing various embodiments. With reference to FIGS. 1-3, the processing device 310 may be configured to be used in a robotic device and may be configured as or including a system-on-chip (SoC) 312. In some embodiments, a variety of components (e.g., the processor 220, the output module 250, the radio module 270) may be integrated in the processing device 310. The SoC 312 may include (but is not limited to) a processor 314, a memory 316, a communication interface 318, and a storage memory interface 320. The processing device 310 or the SoC 312 may further include a communication component 322, such as a wired or wireless modem, a storage memory 324, an antenna 326 for establishing a wireless communication link, and/or the like. The processing device 310 or the SoC 312 may further include a hardware interface 328 configured to enable the processor 314 to communicate with and control various components of a robotic device. The processor 314 may include any of a variety of processing devices, for example any number of processor cores.

The term "system-on-chip" (SoC) is used herein to refer to a set of interconnected electronic circuits typically, but not exclusively, including one or more processors (e.g., 314), a memory (e.g., 316), and a communication interface (e.g., 318). The SoC 312 may include a variety of different types of processors 314 and processor cores, such as a general purpose processor, a central processing unit (CPU), a digital signal processor (DSP), a graphics processing unit (GPU), an accelerated processing unit (APU), a subsystem processor of specific components of the processing device, such as an image processor for a camera subsystem or a display processor for a display, an auxiliary processor, a single-core processor, and a multicore processor. The SoC 312 may further embody other hardware and hardware combinations, such as a field programmable gate array (FPGA), an application-specific integrated circuit (ASIC), other programmable logic device, discrete gate logic, transistor logic, performance monitoring hardware, watchdog hardware, and time references. Integrated circuits may be configured such that the components of the integrated circuit reside on a single piece of semiconductor material, such as silicon.

The SoC 312 may include one or more processors 314. The processing device 310 may include more than one SoC 312, thereby increasing the number of processors 314 and processor cores. The processing device 310 may also include processors 314 that are not associated with an SoC 312 (i.e., external to the SoC 312). Individual processors 314 may be multicore processors. The processors 314 may each be configured for specific purposes that may be the same as or different from other processors 314 of the processing device 310 or SoC 312. One or more of the processors 314 and processor cores of the same or different configurations may be grouped together. A group of processors 314 or processor cores may be referred to as a multi-processor cluster.

The memory 316 of the SoC 312 may be a volatile or non-volatile memory configured for storing data and processor-executable instructions for access by the processor 314. The processing device 310 and/or SoC 312 may include one or more memories 316 configured for various purposes. One or more memories 316 may include volatile memories such as random access memory (RAM) or main memory, or cache memory.

Some or all of the components of the processing device 310 and the SoC 312 may be arranged differently and/or combined while still serving the functions of the various aspects. The processing device 310 and the SoC 312 may not be limited to one of each of the components, and multiple instances of each component may be included in various configurations of the processing device 310.

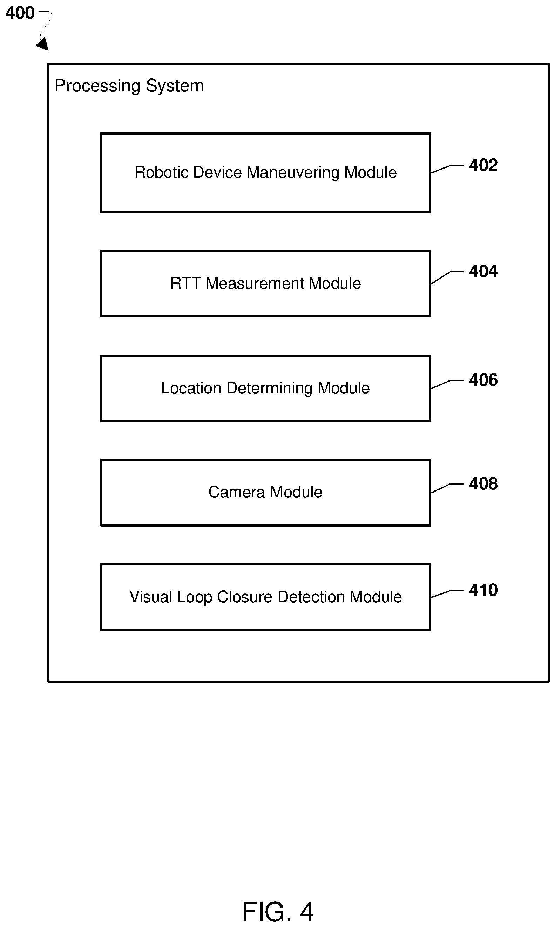

FIG. 4 is a component block diagram illustrating a processing system 400 of a robotic device in accordance with various embodiments. With reference to FIGS. 1-4, the processing system 400 may be implemented in or as a part of a processor (e.g., 220, 314) or SoC 312) of a robotic device (e.g., 102, 200).

The processing system 400 may be configured by machine-readable or processor-executable instructions that may include one or more instruction modules. The instruction modules may include computer program modules. The instruction modules may include one or more of a robotic device maneuvering module 402, an RTT measurement module 404, a location determining module 406, a camera module 408, and a visual loop closure detection module 410, as well as other instruction modules.

The robotic device maneuvering module 402 may be configured to maneuver the robotic device through a plurality of locations.

The RTT measurement module 404 may be configured to perform an RTT measurement of a signal sent by the robotic device to an access point.

The location determining module 406 may be configured to determine a location of the robotic device, for example, based on an RTT measurement of a signal sent by the robotic device to an access point. The location determining module 408 may be configured to determine whether a location of the robotic device is within a threshold distance of a previously-visited one of the plurality of locations.

The camera module 408 may be configured to capture and process images using a camera of the robotic device. The camera module 408 may be configured to select keyframes from among images captured using the camera.

The visual loop closure detection module 410 may be configured to perform visual loop closure detection operations, for example, using information from images captured using the camera of the robotic device.

As used herein, the term "module" may refer to any component or set of components that perform the functionality attributed to the module. This may include one or more physical processors during execution of processor readable instructions, the processor readable instructions, circuitry, hardware, storage media, or any other components.

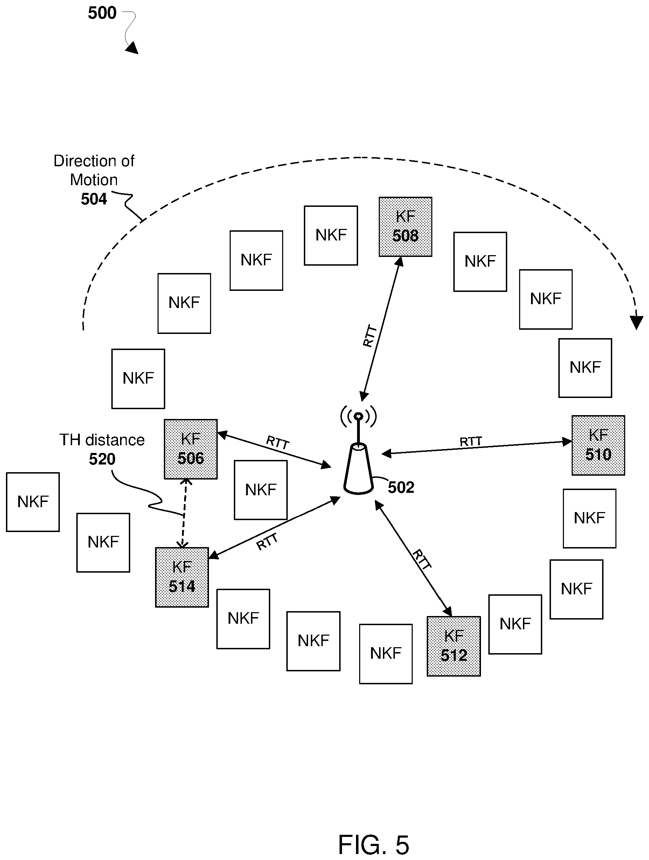

FIG. 5 is a conceptual diagram illustrating aspects of a method for loop closure detection performed by a processing device of a robotic device according to various embodiments. With reference to FIGS. 1-5, the described operations may be performed by a processor of a robotic device (e.g., the processor 220, the processing device 310, the SoC 312, and/or the like).

In various embodiments, a robotic device may maneuver through a plurality of locations. In some embodiments, the robotic device may maneuver in a direction of motion 504 along a substantially loop-shaped path indicated by various non-keyframes (NKF) and keyframes (KF) 506-514. In some embodiments, the robotic device may capture one or more images while maneuvering. In some embodiments, the robotic device may capture one or more keyframe images at locations indicated by keyframes 508-514. In some embodiments, the robotic device may capture images at more or fewer locations, which may correspond to keyframes, to non-keyframes, or at other locations. The number of keyframes and non-keyframes illustrated in FIG. 5 is merely an example and is not intended to be limiting in any way.

The robotic device may determine its location at each of the plurality of locations using a round trip time (RTT) measurement of a signal sent to an access point 502 (e.g., the access point 106 and the network device 104). In some embodiments, the robotic device may determine its location at positions corresponding to keyframes 506, 508, 510, 512, and 514. The selection or incidence of each keyframe may serve as a convenient time or trigger for the robotic device to determine its location by signal RTT measurement. In some embodiments, the RTT measurement includes a travel time of a signal from the robotic device to the access point plus a travel time of a signal (e.g., an acknowledgement or response) from the access point to the robotic device. In some embodiments, the robotic device may perform the RTT measurement of a signal from the access point that is configured according to the Institute of Electrical and Electronics Engineers (IEEE) 802.11mc standard or another suitable technical standard. In some embodiments, the robotic device may associate with each respective keyframe the determined location of the robotic device coincident with each respective keyframe.

In some embodiments, as the robotic device maneuvers through the plurality of locations, the robotic device may determine whether its location is within (or is less than, or is less than or equal to) a threshold distance 520 of a previously-visited location. For example, at a position corresponding to keyframe 514, the robotic device may determine that the robotic device is within the threshold distance 520 of a previously-visited location corresponding to keyframe 506. In some embodiments, the robotic device may compare a determined location of the robotic device with every previously-determined location of the robotic device while maneuvering the robotic device through the plurality of locations. For example, the robotic device may compare a determined location associated with keyframe 508 with the location associated with keyframe 506. As another example, the robotic device may compare a determined location associated with keyframe 512 with locations associated with keyframes 510, 508, and 506. In various embodiments, the robotic device may perform the operations associated with maneuvering and determining its location without using a more computationally intensive process such as visual loop closure detection.

In some embodiments, in response to determining that the location of the robotic device is within the threshold distance of the previously-visited location, the robotic device may perform visual loop closure detection. For example, in response to determining that the location corresponding to keyframe 514 is within the threshold distance from the location corresponding to keyframe 506, the robotic device may perform visual loop closure detection. In some embodiments, the robotic device may perform visual loop closure detection using image information from keyframes 506 and 514, without using information from other locations or keyframes. In this manner, the robotic device may limit the data set on which it performs the computationally intensive operations of visual loop closure detection.

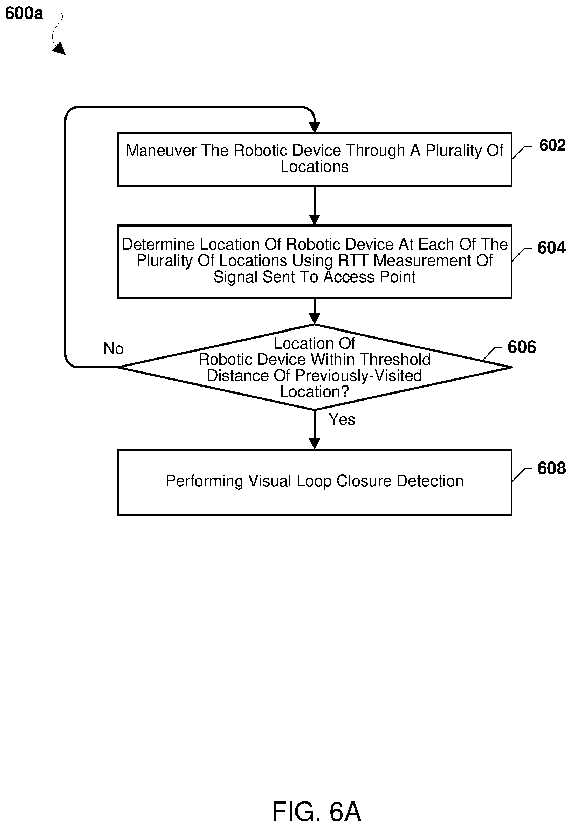

FIG. 6A is a processor flow diagram illustrating an example method performed by a processing device of a robotic device for loop closure detection according to various embodiments. With reference to FIGS. 1-6A, means for performing each of the operations of the method 600a may be a processor of the robotic device, such as the processor 220, the processing device 310, the SoC 312, and/or the like.

In block 602, the processor may maneuver the robotic device through a plurality of locations. For example, the processor may maneuver the robotic device through locations corresponding to keyframes 506-514 and/or other locations.

In block 604, the processor may determine a location of the robotic device at each of the plurality of locations using an RTT measurement of a signal sent to an access point (e.g., 104, 106, 502). In some embodiments, the processor may perform a Wi-Fi RTT measurement to determine the location of the robotic device.

In determination block 606, the processor may determine whether a location of the robotic device is within a threshold distance of a previously-visited one of the plurality of locations. In some embodiments, the processor may compare the determined location of the robotic device with every previously-determined location of the robotic device while maneuvering the robotic device through the plurality of locations.

In response to determining that the location of the robotic device is not within a threshold distance of a previously-visited one of the plurality of locations (i.e., determination block 606 = "No"), the processor may perform the operations of block 602 and continue to maneuver the robotic device.

In response to determining that the location of the robotic device is within the threshold distance of a previously-visited one of the plurality of locations (i.e., determination block 606 = "Yes"), the processor may perform visual loop closure detection in block 608.

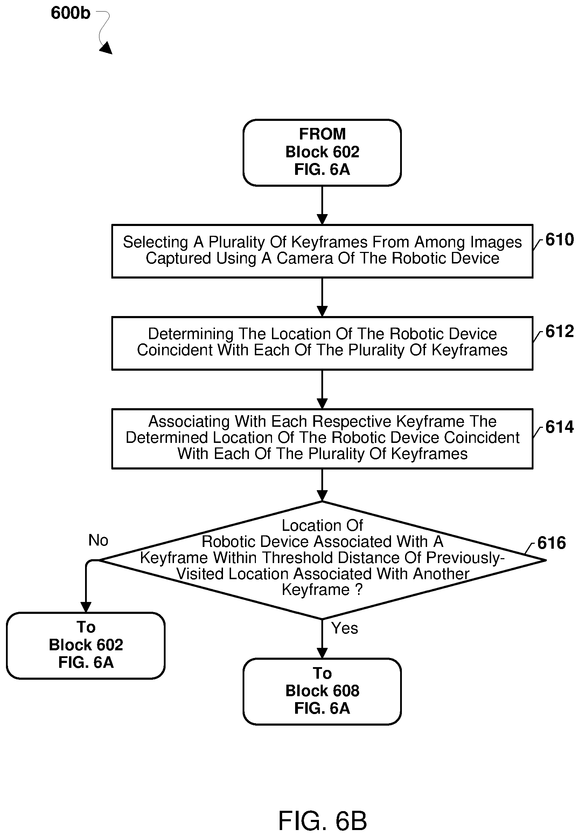

FIG. 6B is a process flow diagram illustrating operations 600b that may be performed by a processing device of a robotic device as part of the method 600a for loop closure detection according to various embodiments. With reference to FIGS. 1-6B, means for performing the operations of the method 600b may be a processor of the robotic device, such as the processor 220, the processing device 310, the SoC 312, and/or the like.

In some embodiments, following the performance of the operations of block 602 of the method 600a, the processor may select a plurality of keyframes from among images captured using a camera of the robotic device in block 610. For example, the processor may (at various times) select keyframes 506-514.

In block 612, the processor may determine the location of the robotic device coincident with each of the plurality of keyframes. As noted above, the processor may determine the location of the robotic device by performing an RTT measurement of a signal that the robotic device sends to an access point (e.g., 104, 106, 502).

In block 614, the processor may associate with each respective keyframe the determined location of the robotic device coincident with each of the plurality of keyframes.

In determination block 616, the processor may determine whether a location of the robotic device that is associated with a keyframe is within a threshold distance of a previously-visited one of the plurality of locations associated with another keyframe. In some embodiments, the processor may determine a distance between the current location of the robotic device and one or more of the previously visited locations and determine whether each distance is less than the threshold distance.

In response to determining that the location of the robotic device that is associated with a keyframe is not within a threshold distance of a previously-visited one of the plurality of locations associated with another keyframe (i.e., determination block 616 = "No"), the processor may further maneuver the robotic device through a plurality of locations in block 602 of the method 600a as described.

In response to determining that the location of the robotic device that is associated with a keyframe is within a threshold distance of a previously-visited one of the plurality of locations associated with another keyframe (i.e., determination block 616 = "Yes"), the processor may perform visual loop closure detection in block 608 of the method 600a as described.

Various embodiments illustrated and described are provided merely as examples to illustrate various features of the claims. However, features shown and described with respect to any given embodiment are not necessarily limited to the associated embodiment and may be used or combined with other embodiments that are shown and described. Further, the claims are not intended to be limited by any one example embodiment. For example, one or more of the operations of the methods and operations 500, 600a, and 600b may be substituted for or combined with one or more operations of the methods 500, 600a, and 600b, and vice versa.

The foregoing method descriptions and the process flow diagrams are provided merely as illustrative examples and are not intended to require or imply that the operations of various embodiments must be performed in the order presented. As will be appreciated by one of skill in the art the order of operations in the foregoing embodiments may be performed in any order. Words such as "thereafter," "then," "next," etc. are not intended to limit the order of the operations; these words are used to guide the reader through the description of the methods. Further, any reference to claim elements in the singular, for example, using the articles "a," "an," or "the" is not to be construed as limiting the element to the singular.

Various illustrative logical blocks, modules, circuits, and algorithm operations described in connection with the embodiments disclosed herein may be implemented as electronic hardware, computer software, or combinations of both. To clearly illustrate this interchangeability of hardware and software, various illustrative components, blocks, modules, circuits, and operations have been described above generally in terms of their functionality. Whether such functionality is implemented as hardware or software depends upon the particular application and design constraints imposed on the overall system. Skilled artisans may implement the described functionality in varying ways for each particular application, but such embodiment decisions should not be interpreted as causing a departure from the scope of the claims.

The hardware used to implement various illustrative logics, logical blocks, modules, and circuits described in connection with the aspects disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of receiver smart objects, e.g., a combination of a DSP and a microprocessor, a plurality of microprocessors, one or more microprocessors in conjunction with a DSP core, or any other such configuration. Alternatively, some operations or methods may be performed by circuitry that is specific to a given function.

In one or more aspects, the functions described may be implemented in hardware, software, firmware, or any combination thereof. If implemented in software, the functions may be stored as one or more instructions or code on a non-transitory computer-readable storage medium or non-transitory processor-readable storage medium. The operations of a method or algorithm disclosed herein may be embodied in a processor-executable software module or processor-executable instructions, which may reside on a non-transitory computer-readable or processor-readable storage medium. Non-transitory computer-readable or processor-readable storage media may be any storage media that may be accessed by a computer or a processor. By way of example but not limitation, such non-transitory computer-readable or processor-readable storage media may include RAM, ROM, EEPROM, FLASH memory, CD-ROM or other optical disk storage, magnetic disk storage or other magnetic storage smart objects, or any other medium that may be used to store desired program code in the form of instructions or data structures and that may be accessed by a computer. Disk and disc, as used herein, includes compact disc (CD), laser disc, optical disc, digital versatile disc (DVD), floppy disk, and Blu-ray disc where disks usually reproduce data magnetically, while discs reproduce data optically with lasers. Combinations of the above are also included within the scope of non-transitory computer-readable and processor-readable media. Additionally, the operations of a method or algorithm may reside as one or any combination or set of codes and/or instructions on a non-transitory processor-readable storage medium and/or computer-readable storage medium, which may be incorporated into a computer program product.

## Claims

1. A method (600a) performed by a processing device (400) of a robotic device (102) for loop closure detection, comprising:
maneuvering (602) the robotic device (102) through a plurality of locations;
determining (604) a location of the robotic device (102) at each of the plurality of locations using a round trip time, RTT, measurement of a signal sent to an access point (106);
determining (606) whether a location of the robotic device (102) is within a threshold distance of a previously-visited one of the plurality of locations; and
performing (608) visual loop closure detection in response to determining that the location of the robotic device (102) is within the threshold distance of the previously-visited one of the plurality of locations.

2. The method of claim 1, wherein determining (604) a location of the robotic device (102) at each of the plurality of locations using a RTT measurement of a signal sent to an access point (106) comprises:
selecting (610) a plurality of keyframes from among images captured using a camera (103) of the robotic device (102); and
determining (612) the location of the robotic device (102) coincident with each of the plurality of keyframes.

3. The method of claim 2, further comprising associating (614) with each respective keyframe the determined location of the robotic device (102) coincident with each of the plurality of keyframes.

4. The method of claim 2, wherein determining (616) whether a location of the robotic device (102) is within a threshold distance of a previously-visited one of the plurality of locations comprises determining whether a location of the robotic device (102) that is associated with a keyframe is within a threshold distance of a previously-visited one of the plurality of locations associated with another keyframe.

5. The method of claim 1, wherein determining (606) whether a location of the robotic device (102) is within a threshold distance of a previously-visited one of the plurality of locations comprises comparing a determined location of the robotic device (102) with every previously-determined location of the robotic device while maneuvering the robotic device (102) through the plurality of locations.

6. The method of claim 1, wherein determining (604) a location of the robotic device (102) at each of the plurality of locations using a round trip time, RTT, measurement of a signal sent to an access point (106) comprises performing a Wi-Fi RTT measurement to determine the location of the robotic device (102).

7. A robotic device (102), comprising:
means for maneuvering the robotic device (102) through a plurality of locations;
means for determining a location of the robotic device (102) at each of the plurality of locations using a round trip time, RTT, measurement of a signal sent to an access point (106);
means for determining whether a location of the robotic device (102) is within a threshold distance of a previously-visited one of the plurality of locations; and
means for performing visual loop closure detection in response to determining that the location of the robotic device (102) is within the threshold distance of the previously-visited one of the plurality of locations.

8. The robotic device of claim 7, wherein means for determining a location of the robotic device (102) at each of the plurality of locations using a RTT measurement of a signal sent to an access point (106) comprises:
means for selecting a plurality of keyframes from among images captured using a camera (103) of the robotic device (102); and
means for determining the location of the robotic device (102) coincident with each of the plurality of keyframes.

9. The robotic device of claim 8, further comprising means for associating with each respective keyframe the determined location of the robotic device (102) coincident with each of the plurality of keyframes.

10. The robotic device of claim 8, wherein means for determining whether a location of the robotic device (102) is within a threshold distance of a previously-visited one of the plurality of locations comprises means for determining whether a location of the robotic device (102) that is associated with a keyframe is within a threshold distance of a previously-visited one of the plurality of locations associated with another keyframe.

11. The robotic device of claim 7, wherein means for determining whether a location of the robotic device (102) is within a threshold distance of a previously-visited one of the plurality of locations comprises means for comparing a determined location of the robotic device (102) with every previously-determined location of the robotic device (102) while maneuvering the robotic device (102) through the plurality of locations.

12. The robotic device of claim 7, wherein means for determining a location of the robotic device (102) at each of the plurality of locations using a round trip time. RTT, measurement of a signal sent to an access point (106) comprises means for performing a Wi-Fi RTT measurement to determine the location of the robotic device (102).

13. A non-transitory processor-readable medium having stored thereon processor-executable instructions configured to cause a processor of a robotic device (102) to perform the method of any one of claim 1 to 6.

## Patentansprüche

1. Verfahren (600a), durchgeführt von einem Verarbeitungsgerät (400) eines Roboters (102) zur Schleifenschlusserkennung, das Folgendes beinhaltet:
Manövrieren (602) des Roboters (102) durch mehrere Positionen;
Bestimmen (604) einer Position des Roboters (102) an jeder der mehreren Positionen mittels einer RTT-(Round Trip Time)-Messung eines zu einem Zugangspunkt (106) gesendeten Signals;
Feststellen (606), ob eine Position des Roboters (102) innerhalb einer Schwellendistanz von einer zuvor besuchten der mehreren Positionen liegt; und
Durchführen (608) einer visuellen Schleifenschlusserkennung als Reaktion auf die Feststellung, dass die Position des Roboters (102) innerhalb der Schwellendistanz von der zuvor besuchten der mehreren Positionen liegt.

2. Verfahren nach Anspruch 1, wobei das Bestimmen (604) einer Position des Roboters (102) an jeder der mehreren Positionen mittels einer RTT-Messung eines zu einem Zugangspunkt (106) gesendeten Signals Folgendes beinhaltet:
Auswählen (610) mehrerer Keyframes aus einer Reihe von mit einer Kamera (103) des Roboters (102) aufgenommenen Bildern; und
Bestimmen (612) der Position des Roboters (102), die mit jedem der mehreren Keyframes zusammenfällt.

3. Verfahren nach Anspruch 2, das ferner das Assoziieren (614) der mit jedem der mehreren Keyframes zusammenfallenden bestimmten Position des Roboters (102) mit dem jeweiligen Keyframe beinhaltet.

4. Verfahren nach Anspruch 2, wobei das Feststellen (616), ob eine Position des Roboters (102) innerhalb einer Schwellendistanz von einer zuvor besuchten der mehreren Positionen liegt, das Feststellen beinhaltet, ob eine mit einem Keyframe assoziierte Position des Roboters (102) innerhalb einer Schwellendistanz von einer zuvor besuchten der mehreren mit einem anderen Keyframe assoziierten Positionen liegt.

5. Verfahren nach Anspruch 1, wobei das Feststellen (606), ob eine Position des Roboters (102) innerhalb einer Schwellendistanz von einer zuvor besuchten der mehreren Positionen liegt, das Vergleichen einer bestimmten Position des Roboters (102) mit jeder zuvor bestimmten Position des Roboters beinhaltet, während der Roboter (102) durch die mehreren Positionen manövriert wird.

6. Verfahren nach Anspruch 1, wobei das Bestimmen (604) einer Position des Roboters (102) an jeder der mehreren Positionen mittels einer RTT-(Round-Trip-Time)-Messung eines zu einem Zugangspunkt (106) gesendeten Signals das Durchführen einer Wi-Fi-RTT-Messung beinhaltet, um die Position des Roboters (102) zu bestimmen.

7. Roboter (102), der Folgendes umfasst:
Mittel zum Manövrieren des Roboters (102) durch mehrere Positionen;
Mittel zum Bestimmen einer Position des Roboters (102) an jeder der mehreren Positionen mittels einer RTT-(Round Trip Time)-Messung eines zu einem Zugangspunkt (106) gesendeten Signals;
Mittel zum Feststellen, ob eine Position des Roboters (102) innerhalb einer Schwellendistanz von einer zuvor besuchten der mehreren Positionen liegt; und
Mittel zum Durchführen einer visuellen Schleifenschlusserkennung als Reaktion auf die Feststellung, dass die Position des Roboters (102) innerhalb der Schwellendistanz von der zuvor besuchten der mehreren Positionen liegt.

8. Roboter nach Anspruch 7, wobei Mittel zum Bestimmen einer Position des Roboters (102) an jeder der mehreren Positionen mittels einer RTT-Messung eines zu einem Zugangspunkt (106) gesendeten Signals Folgendes umfassen:
Mittel zum Auswählen mehrerer Keyframes aus mit einer Kamera (103) des Roboters (102) aufgenommenen Bildern; und
Mittel zum Bestimmen der Position des Roboters (102), die mit jedem der mehreren Keyframes zusammenfällt.

9. Roboter nach Anspruch 8, der ferner Mittel zum Assoziieren der mit jedem der mehreren Keyframes zusammenfallenden bestimmten Position des Roboters (102) mit dem jeweiligen Keyframe umfasst.

10. Roboter nach Anspruch 8, wobei Mittel zum Feststellen, ob eine Position des Roboters (102) innerhalb einer Schwellendistanz von einer zuvor besuchten der mehreren Positionen liegt, Mittel zum Feststellen umfassen, ob eine mit einem Keyframe assoziierte Position des Roboters (102) innerhalb einer Schwellendistanz von einer zuvor besuchten der mehreren mit einem anderen Keyframe assoziierten Positionen liegt.

11. Roboter nach Anspruch 7, wobei Mittel zum Feststellen, ob eine Position des Roboters (102) innerhalb einer Schwellendistanz von einer zuvor besuchten der mehreren Positionen liegt, Mittel zum Vergleichen einer bestimmten Position des Roboters (102) mit jeder zuvor bestimmten Position des Roboters umfassen, während der Roboter (102) durch die mehreren Positionen manövriert wird.

12. Roboter nach Anspruch 7, wobei Mittel zum Bestimmen einer Position des Roboters (102) an jeder der mehreren Positionen mittels einer RTT-(Round-Trip-Time)-Messung eines zu einem Zugangspunkt (106) gesendeten Signals Mittel zum Durchführen einer Wi-Fi-RTT-Messung umfasst, um die Position des Roboters (102) zu bestimmen.

13. Nichtflüchtiges, prozessorlesbares Medium, auf dem prozessorausführbare Befehle gespeichert sind, die zum Veranlassen eines Prozessors eines Roboters (102) zum Durchführen des Verfahrens nach einem der Ansprüche 1 bis 6 konfiguriert sind.

## Revendications

1. Procédé (600a) réalisé par un dispositif de traitement (400) d'un dispositif robotique (102) pour une détection de fermeture de boucle, comprenant :
la manœuvre (602) du dispositif robotique (102) parmi une pluralité d'emplacements ;
la détermination (604) d'un emplacement du dispositif robotique (102) à chacun de la pluralité d'emplacements à l'aide d'une mesure de temps aller-retour, RTT, d'un signal envoyé à un point d'accès (106) ;
la détermination (606) qu'un emplacement du dispositif robotique (102) se trouve ou non en-deçà d'une distance seuil d'un emplacement précédemment visité de la pluralité d'emplacements ; et
la réalisation (608) d'une détection de fermeture de boucle visuelle en réponse à la détermination que l'emplacement du dispositif robotique (102) se trouve en-deçà de la distance seuil de l'emplacement précédemment visité de la pluralité d'emplacements.

2. Procédé selon la revendication 1, dans lequel la détermination (604) d'un emplacement du dispositif robotique (102) à chacun de la pluralité d'emplacements à l'aide d'une mesure RTT d'un signal envoyé à un point d'accès (106), comprend :
la sélection (610) d'une pluralité de trames clés parmi des images capturées à l'aide d'une caméra (103) du dispositif robotique (102) ; et
la détermination (612) de l'emplacement du dispositif robotique (102) coïncidant avec chacune de la pluralité de trames clés.

3. Procédé selon la revendication 2, comprenant en outre l'association (614) à chaque trame clé respective de l'emplacement déterminé du dispositif robotique (102) coïncidant avec la pluralité de trames clés.

4. Procédé selon la revendication 2, dans lequel la détermination (616) qu'un emplacement du dispositif robotique (102) se trouve ou non en-deçà d'une distance seuil d'un emplacement précédemment visité de la pluralité d'emplacements comprend la détermination qu'un emplacement du dispositif robotique (102) associé à une trame clé se trouve ou non à une distance seuil d'un emplacement précédemment visité de la pluralité d'emplacements associés à une autre trame clé.

5. Procédé selon la revendication 1, dans lequel la détermination (606) qu'un emplacement du dispositif robotique (102) se trouve ou non en deçà d'une distance seuil d'un emplacement précédemment visité de la pluralité d'emplacements comprend la comparaison d'un emplacement déterminé du dispositif robotique (102) à chaque emplacement précédemment déterminé du dispositif robotique durant la manœuvre du dispositif robotique (102) parmi la pluralité d'emplacements.

6. Procédé selon la revendication 1, dans lequel la détermination (604) d'un emplacement du dispositif robotique (102) à chacun de la pluralité d'emplacements à l'aide d'une mesure de temps aller-retour, RTT, d'un signal envoyé à un point d'accès (106) comprend la réalisation d'une mesure RTT Wi-Fi pour déterminer l'emplacement du dispositif robotique (102).

7. Dispositif robotique (102), comprenant :
un moyen de manœuvre du dispositif (102) parmi une pluralité d'emplacements ;
un moyen de détermination d'un emplacement du dispositif robotique (102) à chacun de la pluralité d'emplacements à l'aide d'une mesure de temps aller-retour, RTT, d'un signal envoyé à un point d'accès (106) ;
un moyen de détermination qu'un emplacement du dispositif robotique (102) se trouve ou non en-deçà d'une distance seuil d'un emplacement précédemment visité de la pluralité d'emplacements ; et
un moyen de réalisation d'une détection de fermeture de boucle visuelle en réponse à la détermination que l'emplacement du dispositif robotique (102) se trouve ou non en-deçà de la distance seuil de l'emplacement précédemment visité de la pluralité d'emplacements.

8. Dispositif robotique selon la revendication 7, dans lequel le moyen de détermination d'un emplacement du dispositif robotique (102) à chacun de la pluralité d'emplacements à l'aide d'une mesure RTT d'un signal envoyé à un point d'accès (106), comprend :
un moyen de sélection d'une pluralité de trames clés parmi des images capturées avec une caméra (103) du dispositif robotique (102) ; et
un moyen de détermination de l'emplacement du dispositif robotique (102) coïncidant avec chacune de la pluralité de trames clés.

9. Dispositif robotique selon la revendication 8, comprenant en outre un moyen d'association à chaque trame clé correspondant à l'emplacement déterminé du dispositif robotique (102) coïncidant avec chacune de la pluralité de trames clés.

10. Dispositif robotique selon la revendication 8, dans lequel un moyen de détermination qu'un emplacement du dispositif robotique (102) se trouve ou non en-deçà d'une distance seuil d'un emplacement précédemment visité de la pluralité d'emplacements comprend un moyen de détermination qu'un emplacement du dispositif robotique (102) associé à une trame clé se trouve ou non en-deçà d'une distance seuil d'un emplacement précédemment visité de la pluralité d'emplacements associés à une autre trame clé.

11. Dispositif robotique selon la revendication 7, dans lequel le moyen de détermination qu'un emplacement du dispositif robotique (102) se trouve ou non en-deçà d'une distance seuil d'un emplacement précédemment visité de la pluralité d'emplacements comprend un moyen de comparaison d'un emplacement déterminé du dispositif robotique (102) à chaque emplacement précédemment déterminé du dispositif robotique (102) durant la manœuvre du dispositif robotique (102) parmi la pluralité d'emplacements.

12. Dispositif robotique selon la revendication 7, dans lequel le moyen de détermination d'un emplacement du dispositif robotique (102) à chacun de la pluralité d'emplacements à l'aide d'une mesure de temps aller-retour, RTT, d'un signal envoyé à un point d'accès (106) comprend un moyen de réalisation d'une mesure RTT Wi-Fi afin de déterminer l'emplacement du dispositif robotique (102).

13. Support non transitoire lisible par processeur sur lequel sont stockées des instructions exécutables par processeur configurées pour amener un processeur d'un dispositif robotique (102) à réaliser le procédé selon l'une quelconque des revendications 1 à 6.
